# EUROPEAN PATENT APPLICATION

(11) **EP 2 863 663 A1**
(43) Date of publication of application: **22.04.2015**
(21) Application number: 14180454.2
(22) Date of filing: 11.08.2014
(51) Int. Cl.: H04W 8/00

(54) **Immediate connection establishment for device discovery upon detecting a touch event**

(30) Priority: 04.09.2013 US 201314017655
(71) Applicant: Nokia Corporation, 02610 Espoo (FI)
(72) Inventor: Palin, Arto, 37830 Vantaa (FI); Reunamäki, Jukka, 33820 Tampere (FI)
(74) Representative: Nokia Corporation

(57) **Abstract**

In accordance with an example embodiment of the present invention, an apparatus, a computer program product and a method is provided for immediate connection establishment. The example embodiment comprises receiving, at an apparatus, one or more device discovery response messages, the one or more device discovery response messages including information regarding source device of the respective message. The example embodiment further comprising determining, by the apparatus, whether any of the one or more received device discovery response messages includes a predefined indication, wherein the predefined indication indicates that the source device has been touched; and selecting, by the apparatus, when determining that one or more of the received device discovery response message includes the predefined indication, source device of the one or more device discovery response messages including the predefined indication for immediate connection establishment.
Radio signal strengths of the source devces may also be taken into consideration in order to select a source device. Additionaly, a source device may send the indication in a device discovery response message only if it has received a device discovery message from the apparatus within a predefined time period (e.g. less than 3s) after it has detected close contact with the apparatus using one of its sensors.

## Description

### TECHNICAL FIELD

The present application relates generally to wireless communication, more particularly to triggering actions relating to immediate connection establishment based on information received from a discovered device.

### BACKGROUND

Modern society has adopted, and is becoming reliant upon, wireless communication devices for various purposes, such as, connecting users of the wireless communication devices with other users. Wireless communication devices can vary from battery powered handheld devices to stationary household and / or commercial devices utilizing an electrical network as a power source. Due to rapid development of the wireless communication devices a number of areas capable of enabling entirely new types of communication applications have emerged.

In order to communicate with another device, a wireless communication device needs to first detect the other device, to which a communication connection is preferred. After device detection, a wireless communication link may be established between the devices.While established wireless communication links allow devices to exchange information, setting the devices to device detection state in order to initiate device discovery for establishing of the wireless communication link typically requires user input.

### SUMMARY

Various aspects of examples of the invention are set out in the claims.

According to a first aspect of the present invention, a method is provided comprising receiving, at an apparatus, one or more device discovery response messages, the one or more device discovery response messages including information regarding source device of the respective message; determining, by the apparatus, whether any of the one or more received device discovery response messages includes a predefined indication; and selecting, by the apparatus, when determining that one or more of the received device discovery response message includes the predefined indication, source device of the one or more device discovery response messages including the predefined indication for immediate connection establishment.

According to a second aspect of the present invention, a computer program product is disclosed, adapted to cause performing of the method according to the first aspect when said program is run on a computer.

According to a third aspect of the present invention, an apparatus is disclosed, comprising at least one processor and at least one memory including executable instructions, the at least one memory and the executable instructions being configured to, in cooperation with the at least one processor, cause the apparatus to perform at least the following: Receive one or more device discovery response messages, the one or more device discovery response messages including information regarding source device of the respective message; determine whether any of the one or more received device discovery response messages includes a predefined indication; and select, in response to the determination that one or more of the received device discovery response messages includes the predefined indication, source device of the one or more device discovery response messages for immediate connection establishment.

According to a fourth aspect of the present invention, a method is disclosed, comprising monitoring output of at least one sensor at an apparatus; determining, by the apparatus, whether any of the monitored sensor output satisfies predefined response criteria; and transmitting a device discovery response message including a predefined indication in response to detecting a device discovery message within a predefined time period after determination of a sensor output satisfying the predefined response criteria.

According to fifth aspect of the present invention, a computer program product is disclosed, adapted to cause performing of the method according to the fourth aspect when said program is run on a computer medium.

According to a sixth aspect of the present invention, an apparatus is disclosed, comprising at least one processor and at least one memory including executable instructions, the at least one memory and the executable instructions being configured to, in cooperation with the at least one processor, cause the apparatus to perform at least the following: Monitor output of at least one sensor at the apparatus; determine whether any of the monitored sensor output satisfies predefined response criteria; and transmit a device discovery response message including a predefined indication in response to detecting a device discovery message within a predefined time period after determination of a sensor output satisfying the predefined response criteria.

The foregoing summary includes example embodiments of the present invention that are not intended to be limiting. The above embodiments are used merely to explain selected aspects or steps that may be utilized in implementations of the present invention. However, it is readily apparent that one or more aspects, or steps, pertaining to an example embodiment can be combined with one or more aspects, or steps, of other embodiments to create new embodiments still within the scope of the present invention. Therefore, persons of ordinary skill in the art would appreciate that various embodiments of the present invention may incorporate aspects from other embodiments, or may be implemented in combination with other embodiments.

### BRIEF DESCRIPTION OF THE DRAWINGS

For a more complete understanding of example embodiments of the present invention, reference is now made to the following descriptions taken in connection with the accompanying drawings in which:
FIGURE 1 discloses an example of operational environment in which apparatuses according to an example embodiment of the invention may be used;
FIGURE 2 illustrates an example Bluetooth™ communication protocol based device discovery with Extended Inquiry Response (EIR) procedure usable in accordance with at least one example embodiment;
FIGURE 3 illustrates example data formats of information included in Frequency Hopping Synchronization (FHS) and Extended Inquiry Response (EIR) packets, usable in accordance with at least one example embodiment.
FIGURE 4 discloses a modular layout for an example apparatus according to an example embodiment of the present invention;
FIGURE 5 illustrates an example short-range communication scenario in accordance with at least one example embodiment of the present invention.
FIGURE 6A illustrates an example short-range communication scenario in accordance with at least one example embodiment of the present invention;
FIGURE 6B illustrates an example short-range communication scenario in accordance with at least one example embodiment of the present invention;
FIGURE 7 illustrates a first example flow diagram showing operations for selecting a device for communication establishment in accordance with at least one example embodiment of the present invention;
FIGURE 8 illustrates a second example flow diagram showing operations for selecting a device for communication establishment in accordance with at least one example embodiment of the present invention;
FIGURE 9 illustrates a third example flow diagram showing operations for selecting a device for communication establishment in accordance with at least one example embodiment of the present invention;
FIGURE 10 illustrates an example flow diagram showing operations for responding to a device discovery request in accordance with at least one example embodiment of the present invention;
FIGURE 11 discloses anapparatus comprising example hardware for implementing computer software instructions stored in the apparatus according to an example embodiment of the present invention.

### DETAILED DESCRIPTON OF THE DRAWINGS

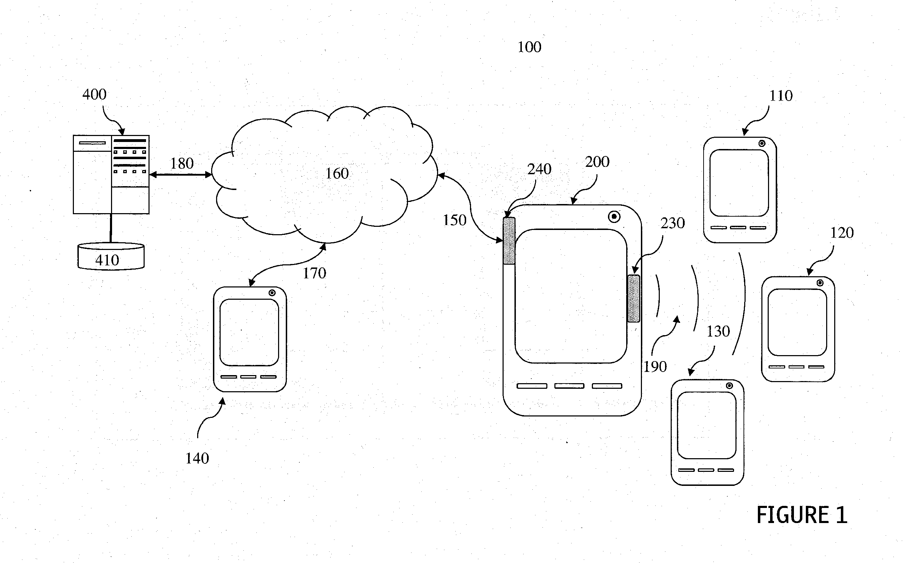

Example embodiments of the present invention and their potential effects are understood by referring to FIGURES 1 through 11 of the drawings.

FIGURE 1 discloses an example of operational environment 100 in which various apparatuses according to an example embodiment of the invention may be used. An apparatus 200, for example a personal computer, an engineering workstation, a personal digital assistant, a portable computer, a computerized watch, a wired or wireless terminal, mobile phone, node, and / or the like, a set-top box, a personal video recorder (PVR), an automatic teller machine (ATM), a game console, or the like is shown having short-range communication means, such as a short-range communications interface 230, configured to communicate wirelessly with various short-range communication devices, such as devices 110, 120 and 130 via a short-range communication connection. Short-range communication connections may be used for the exchange of information over a local area varying for example from a couple of meters to some hundred of meters. Examples of wireless short-range communication technologies comprise Bluetooth™, Bluetooth™ Low Energy, WLAN, wireless universal serial bus (WUSB), ultra-wideband (UWB), ZigBee (802.15.4, 802.15.4a), and ultra high frequency radio-frequency identification (UHF RFID) technologies. Apparatus 200 may further be embodied as a portable wireless communications device equipped with wide-area communication means, such as long-range communications interface 240 to connect with network 160 via a wireless communication link 150 to communicate for example either with a wireless communication device 140, or with a remote server 400 as illustrated in FIGURE 1.

Depending on the embodiment, the wireless communication link 150 may be provided over a wide-are communication connection. Examples of wireless wide-area communication technologies comprise 2^{nd} generation (2G) digital cellular networks, for example Global System for Mobile Communications (GSM) that operates in the 900 MHz / 1.8 GHz bands in Europe and in the 850 MHz and 1.9 GHz bands in the United States. Wide-area communication technologies may further comprise general packet radio service (GPRS) technology, universal mobile telecommunications system (UMTS) technology, code division multiple access (CDMA) technologies, 3GPP Long Term Evolution (LTE) technologies, and / or the like.

According to an alternative example embodiment, link 150 may be provided with a wired connection. Examples of wired communication technologies include ethernet, IEEE 1394, universal serial bus (USB) protocol, any other serial or parallel wired connection, and / or the like. Network 160 may be either a wireless network, or a wired network. Network 160 may further be connected to other networks. According to a further example embodiment, apparatus 200 may be a stationary device having a wireless and / or a wired interface for communicating with network 160.

As further shown in FIGURE 1 various other devices, such as other mobile device 140 and server 400 including a database 410 may be connected to the network 160 via respective links (170 and 180) so that apparatus 200 may communicate with any of the other devices via the network 160.

According to one example, apparatus 200, such as a wireless communication device, before actually initiating a wireless short-range communication with one or more other wireless communication devices, such as any of the devices 110, 120 or 130 through a wireless short-range communication link 190, needs to first perform device discovery to detect one or more of the devices 110, 120 and 130 within it's short-range communication coverage. After device discovery and selection, apparatus 200 may proceed with short-range communication link establishment in order to commence communication with one or more of the detected devices.

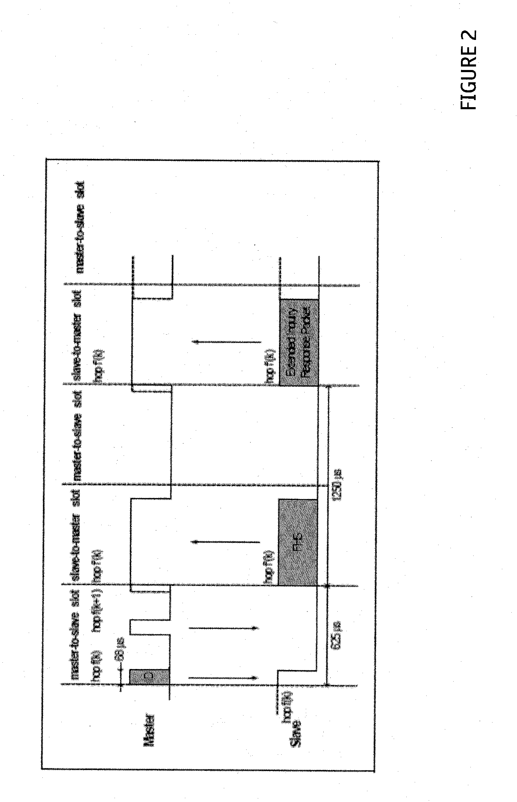

An example device discovery scenario usable in accordance with at least one example embodiment of the present invention is illustrated in FIGURE 2. This example discloses Bluetooth™ communication protocol based device discovery with Extended Inquiry Response (EIR) procedure. It should be noted that Bluetooth™ communication protocol in this context is intended to be used only as an example, and thus, other wireless communication protocols may be employed in implementing one or more embodiments of the present invention. Initially an apparatus, such as apparatus 200 of FIGURE 1, may be configured to perform a Bluetooth™ Inquiry in order to detect other Bluetooth™ devices within its coverage, by transmitting one or more ID packets. These ID packets transmitted by the apparatus do not contain any information about the source or recipient of the transmissions. However, the packets may indicate which class of devices should respond. Bluetooth™ Core Specification, version 4.0, published on June 30th, 2010 provided by Bluetooth™ Special Interest Group (SIG) accessible at www.bluetooth.org defines one general inquiry access code (GIAC) to inquire for any type of device, and multiple dedicated inquiry access codes (DIAC) that only inquire for certain type of device to respond to the ID packet.

Bluetooth™ Inquiry procedure may be performed in order to find discoverable Bluetooth™ devices within transmission range. As shown in FIGURE 2, Inquiring device is a Master and any responding device is a Slave. Default duration of a Bluetooth™ Inquiry scan is 11.25ms when performing a standard scan and 22.5ms when performing an interlaced scan. Default value for a Bluetooth™ Inquiry scan interval is 2.56s. In the example of FIGURE 2, the master-to-slave slot duration is 625µs, and the total master-to-slave and slave-to-master slot duration is 1250µs. Apparatuses in a discoverable mode that receive Bluetooth™ Inquiry packets, such as one or more ID packets that typically have a duration of 68µs, may transmit a response including a Frequency Hop Synchronization (FHS) packet.

As illustrated on the example Bluetooth™ communication protocol based device discovery with Extended Inquiry Response (EIR) of FIGURE 2, an Extended Inquiry Response (EIR) packet may be transmitted by the responding device subsequent to the transmission of the FHS packet. The EIR packet may contain miscellaneous information in addition to what is delivered in the basic inquiry response (i.e. FHS packet). EIR packets may comprise information regarding, for example, services offered by the apparatus or some vendor specific information. The impending transmission of an EIR packet may be indicated by an EIR indicator bit that is set in the FHS packet. If it is indicated in the FHS packet that an EIR packet follows (i.e., the EIR bit is set), transmission of the EIR packet transmission initiates in the next slave-to-master slot. EIR packets may be asynchronous connectionless link (ACL) packets of type DM1, DM3, DM5, DH1, DH3 or DH5.

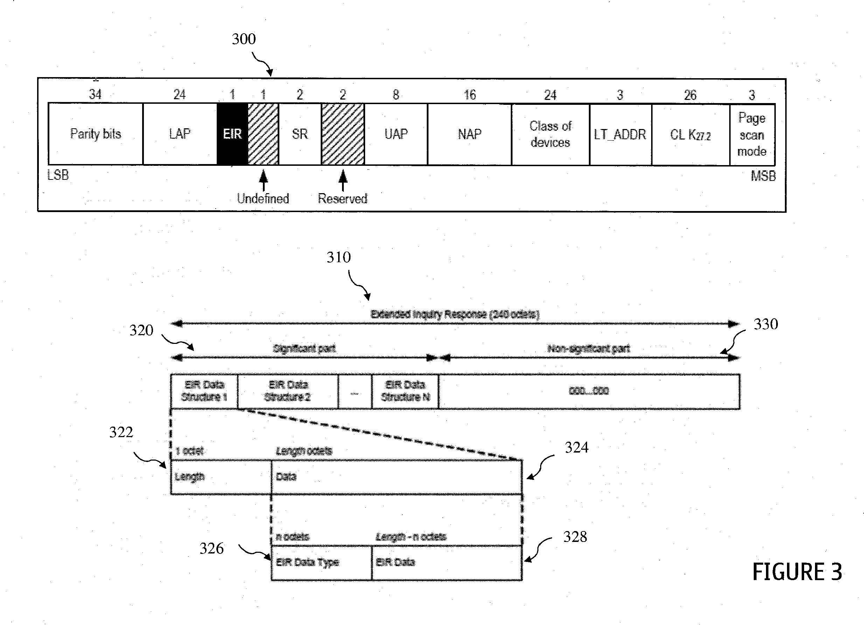

Example data format included in a FHS packet usable e.g. in connection with the example Bluetooth™ communication protocol based device discovery with Extended Inquiry Response (EIR) of FIGURE 2, includes various elements as defined in the existing Bluetooth™ Core Specification, version 4.0, published on June 30th, 2010 provided by Bluetooth™ Special Interest Group (SIG), accessible at www.bluetooth.org. FIGURE 3 illustrates data elements of an example FHS packet 300 usable in connection with the example Bluetooth™ communication protocol comprising at least a Bluetooth Device Address (BD_ADDR), which is formed of three address parts, Lower Address Part (LAP), Upper Address Part (UAP) and Non-significant Address Part (NAP), device class (CoD), indication whether an Extended Inquiry Response (EIR) follows the FHS packet, Bluetooth™ Page scan mode and clock phase. The Upper Address Part (UAP) and Non-significant Address Part (NAP) of the Bluetooth Device Address form identification of a manufacturing company of a Bluetooth device. The class of device (CoD) field defines the kind of device that is responding. As an example, the responding device's major class may be audio device and minor class wearable headset device. Full description of the class of device information is provided by the Bluetooth Special Interest Group and accessible e.g. at: https://www.bluetooth.org/Technical/AssignedNumbers/baseband.htm.

An example data format of an EIR packet usable e.g. in connection with the example Bluetooth™ communication protocol based device discovery with Extended Inquiry Response (EIR) of FIGURE 2 includes various elements as defined in the existing Bluetooth™ Core Specification, version 4.0, published on June 30th, 2010 provided by Bluetooth™ Special Interest Group (SIG), accessible at www.bluetooth.org. Example FIGURE 3 illustrates data format of an example EIR packet 310, which includes 240 octets of data and comprises a significant part 320 and a non-significant part 330. The significant part 320 of the example EIR packet 310 contains a sequence of data structures. Each data structure have a length field 322 of one octet, which contains a length value for associated data field 324, and the data field 324 consisting payload for a number of octets corresponding to the length value of the length field 322. The first n octets 326 of the data field contain the extended inquiry response (EIR) data type. The content of the remaining length - n octets 328 in the data field depends on the value of the EIR data type and contains EIR data. The non-significant part 330 of the EIR packet 310 extends the extended inquiry response to 240 octets and contains all-zero octets. The example EIR packet 310 may include various information regarding the responding device, such as information regarding supported service classes, name information and transmission power level of the responding device. The complete list of service classes is provided by the Bluetooth Special Interest Group and accessible e.g. from here: https://www.bluetooth.org/Technical/AssignedNumbers/service_discovery.htm.

According to an example embodiment of the present invention, an apparatus receiving a device detection message, such as the ID packet of the Bluetooth™ inquiry shown on FIGURE 2, may include a prefedined indication to the response message. The predefined indication may correspond to an event detected by the apparatus, such as the apparatus detecting that it has been touched, moved, activated, it has received device discovery message, or like. According to one example embodiment, the predefined indication is included in the EIR packet 310 shown on FIGURE 3. In the example embodiment, the predefined indication is provided in the EIR data type field 326 shown on FIGURE 3. So, a specific EIR data field may be reserved in Bluetooth™ protocol for apparatuses to indicate a predefined event, such as the apparatus detecting that it has been touched. In this example embodiment, the following EIR data field 328 may include additional information regarding the detected event, such as received signal strength information (RSSI value) regarding the previously received ID packet of the Bluetooth™ Inquiry. Alternatively, the additional information in the EIR data field 328 may include information regarding highest signal strength information (RSSI value) detected within a predefined time period, such as 10 seconds, or like. According to an alternative embodiment, the predefined indication is provided in the EIR data field 328. In this alternative embodiment the EIR data type field 326 of FIGURE 3 would indicate that the following EIR data field 328 comprises a 128 bit Universally Unique Identifier (UUID), and the 128 bit UUID of the data field 328 indicates the predefined event, such as the apparatus detecting that it has been touched.

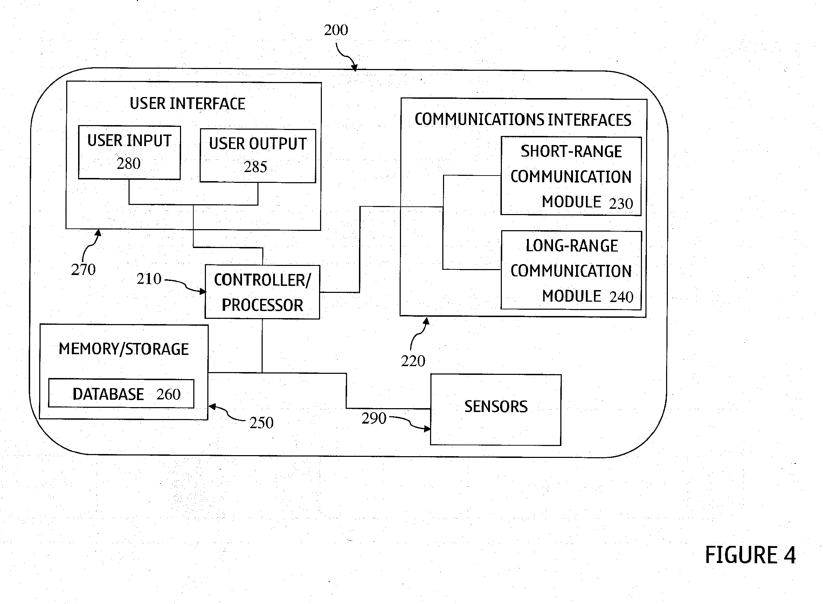

FIGURE 4 discloses a modular layout for an example apparatus according to an example embodiment of the present invention. In FIGURE 4, apparatus 200 of FIGURE 2 is broken down into modules configured to cause the apparatus to perform various functionalities. The functionalities may be provided by various combinations of the software and / or hardware components discussed below according to an embodiment of the present invention.

Control module 210 is configured to regulate operation of the apparatus 200. The control module may be embodied as a controlling means, for example as a controlling circuitry or one or more processors. Inputs for the control module 210 may be received from various other modules comprised within apparatus 200. For example, user interface 270 may provide input to the control module 210 in response to receiving input from a user via user input 280. So, user input received via the user interface 270 may be used as an input in the control module 210 for controlling the operation of the apparatus 200. Control module 210 may interpret and / or process the input data and, in response, may issue one or more control commands to at least one of the other modules within apparatus 200.

In accordance with an example embodiment, apparatus 200, embodied for example as a wireless communication device, comprises communications interfaces 220. Communications interfaces 220 may incorporate one or more communication modules of the apparatus 200. In an example embodiment, the communications interfaces 220 may comprise means for wired and / or wireless communication. As shown in the example of FIGURE 4, communications interfaces 220 may comprise a short-range communications module 230 and a long-range communications module 240. It should be understood that although FIGURE 4 illustrates only one short-range communication module 230 and one long-range communication module 240 for the sake of clarity, apparatus 200 may comprise any number of further communications modules. For example, two or more additional wired and / or wireless communication modules may be included in the apparatus 200. Apparatus 200 may utilize one or more of these modules to receive information from both local and long distance sources, and to transmit data to local or remote recipient devices from apparatus 200. Communications interfaces 220 may be activated by control module 210, or by control resources local to the sub-modules responding to received messages, environmental influences and / or other devices in communication with the apparatus 200.

Short-range wireless networks provide communication solutions that avoid some of the problems seen in large cellular networks. Bluetooth™ is an example of a short-range wireless technology quickly gaining acceptance in the marketplace. Bluetooth™ enabled wireless communication device may transmit and receive data rates from 720 Kbps up to 2-3 Mbps within a range of 10 meters, and may transmit up to 100 meters with additional power boosting. A user does not actively instigate a Bluetooth™ network. Instead, a plurality of devices within operating range of each other will automatically form a network group called a "piconet". Any device may promote itself to the master of the piconet, allowing it to control data exchanges with up to seven "active" slaves and 255 "parked" slaves. Active slaves exchange data based on the clock timing of the master. Parked slaves monitor a beacon signal in order to stay synchronized with the master, and wait for an active slot to become available. These devices continually switch between various active communication and power saving modes in order to transmit data to other piconet members. In addition to Bluetooth™ and Bluetooth™ Low Energy, other popular short-range wireless networks include WLAN (of which "Wi-Fi" local access points communicating in accordance with the IEEE 802.11 standard, is an example), WUSB, UWB, ZigBee (802.15.4, 802.15.4a), and UHF RFID. All of these wireless mediums have features and advantages that make them appropriate for various applications.

Short-range communication module 230 may comprise short-range communication interface embodied for example as a transmitter and/or receiver for exchanging information across short-range wireless network using a short-range communication protocol. Example communication protocols for short-range communication may comprise Bluetooth™, Bluetooth™ Low Energy, wireless local area network (WLAN), ultra-wide band (UWB), and wireless universal serial bus (WUSB) technologies. Bluetooth™ Low Energy communication protocol provides a security enhancing feature for creating temporary identification information that may be used to mask actual identification of the wireless communication device. The temporary identification information may be used by other devices in communicating with the apparatus 200. However, only other devices possessing secret address component information may determine the actual identity of the masked wireless communication device. The temporary identification information may further be recompiled when a threshold condition is satisfied.

Long-range communication module 240 may comprise a long-range communications interface configured to communicate and exchange information over a long distance in a large geographic area using any of the wide-area communication technologies described earlier. Examples of wireless long-range communication technologies comprise 2^{nd} generation (2G) digital cellular networks, for example Global System for Mobile Communications (GSM) that may communicate in the 900 MHz / 1.8 GHz bands in Europe and in the 850 MHz and 1.9 GHz bands in the United States. Long-range communication technologies may further comprise general packet radio service (GPRS) technology, universal mobile telecommunications system (UMTS) technology, code division multiple access (CDMA) technologies, and / or the like. Long-range communication technologies may also operate to transmit and receive messages, such as text messages via a short messaging service (SMS), and / or multimedia content via multimedia messaging service (MMS) messages. Long-range communication technologies may provide voice and data services.

As a subset of long-range communications module 240, or alternatively operating as an independent module separately coupled to processor 210, the apparatus 200 may comprise a broadcast receiver. The broadcast receiver may be a digital audio- or video receiver, for example a digital audio broadcasting (DAB) or a digital video broadcasting (DVB) receiver, and / or the like. According to an example embodiment, the broadcast receiver comprises a Digital Video Broadcast for Handheld Apparatuses (DVB-H) receiver. The broadcasting transmissions may be encoded so that only certain apparatuses may access the transmitted content. The broadcast transmission may comprise text, audio and / or video information, and data. In an example embodiment, apparatus 200 may receive broadcasts and / or information within the broadcast signal to determine if the apparatus is permitted to view the received content.

According to one example embodiment either the short-range communications module 230, or the long-range communications module 240 may be equipped with a wired interface that may be used for communicating with another device using a wired communication protocol via an interface such as Ethernet, an IEEE 1394 communication interface, a universal serial bus (USB) interface, and / or the like.

User interface 270 may include visual, audible and / or tactile elements which allow a user to receive data from, and enter data into, the apparatus. Data entered by a user is received via user input module 280 and may be interpreted by control module 210, for example to affect the behavior of apparatus 200. User-inputted data may also be transmitted via any of the communication modules of the communications interfaces 220 to another device. Information may also be received by other devices at the apparatus 200 via communications interfaces 220. Control module 210 may cause this information to be transferred to user interface 270 for presentation to the user via user output module 290. User interface 270 may comprise one or more user input and output modules, and there may also be a module operating both as a user input module 280 and user output module 285, for example a touch screen display operating as a tactile user interface.

Apparatus 200 may further comprise one or more sensors shown as 290 on FIGURE 2. The sensors 290 may comprise one or more sensor configured to detect events relating to the apparatus 200. Examples of sensors 290 include motion sensors, such as any combination of an accelerometer, a gyroscope, an electronic compass, optical sensors including a camera, infra-red and laser sensors, radio frequency sensors including a radar, audio sensors including on or more microphones and acoustic sensors, pressure sensors, microelectromechanical systems (MEMS) sensor, or the like. According to an example embodiment, the event detected by the sensors 290 includes detection that the apparatus 200 has been touched.

Apparatus 200 may further comprise a memory and / or storage 250. Memory / storage 250 may be connected to controller 210. Memory / storage 250 may store executable instructions that are configured to cause the apparatus 200 to perform various actions in co-operation with the control module 210. Memory / storage 250 may further include one or more databases, such as database 260 shown on FIGURE 4. According to one example embodiment of the present invention, the memory/storage 250 maintains and / or stores information regarding triggering connectivity events for example in the form of one or more dedicated databases, such as the database 260 on FIGURE 4. The information stored in the memory / storage 250 may include for example executable instructions for determining whether a response message received from a detected device includes a predefined indication, such as an indication that the detected apparatus has been touched. Alternatively, or in addition, the executable instructions may further comprise software instructions for determining whether received signal strength of the response message received from the detected device exceeds a predefined threshold level.

According to one example embodiment of the present invention, the memory/storage 250 may further maintain information regarding one or more actions to be initiated in response to receiving sensor output from sensors 290 satisfying predefined response criteria, such as sensor data indicating that the apparatus has been touched moved, activated, it has received a device discovery message, or like. Such information may comprise for example software instructions for writing a predefined indication into a device discory response message for communicating with a short-range communications module in response to detecting a device discovery message. The memory/storage 250 may further store software instructions for maintaining a timer value associated with the predefined response criteria so that the short-range communication module 230 may be instructed to respond to detected device discovery messages with a device discovery response including the predefined indication until the timer value expires.

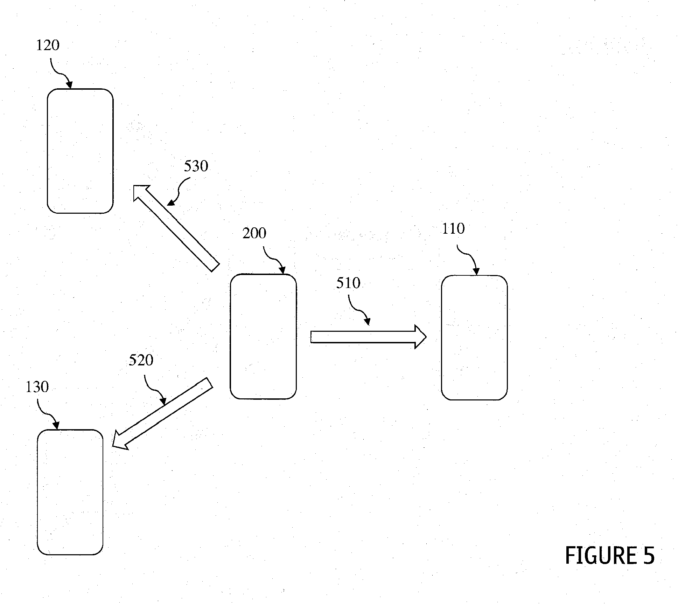

FIGURE 5 discloses an example short-range communication scenario according to one embodiment of the present invention, where apparatus 200 of FIGURE 1 is within short-range communication range of the other apparatuses 110, 120 &130 of FIGURE 1. Apparatuses may all be capable of communicating utilizing same wireless short-range communication protocol, such as Bluetooth™. In an example usage scenario, apparatus 200 may trigger a short-range communications module 230, such as the Bluetooth™ radio modem to enter into a device discovery mode for transmitting device discovery messages. Apparatus 200 may then initiate device discovery by transmitting one or more device discovery messages 510, 520 and 530, such as ID packets according to the Bluetooth™ protocol as discussed in connection with FIGURE 2. The ID packets may be general inquiry access code packets (GIAC) or DIAC packets. Apparatuses 110, 120 and 130 that are within coverage may then receive these device discovery messages. It should be noted that although FIGURE 5 discloses device discovery messages 510-530 as separate messages for the sake of clarity, device discovery messages are broadcast transmission so that a single device discovery message may be received by one or more of the apparatuses 110, 120 and 130.

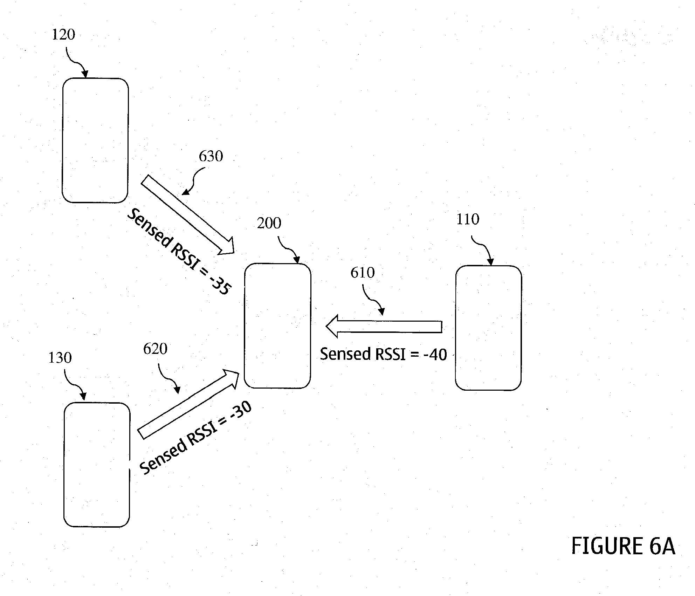

Upon receipt of one or more device discovery messages, apparatuses 110, 120 and 130 may transmit response messages to the device discovery message as referred in FIGURE 6A as 610, 620 and 630. In particular, apparatuses 110 and 120 may respond with an Extended Inquiry Response (EIR), i.e. a Frequency Hop Synchronization (FHS) packet followed by an EIR packet as disclosed in connection with FIGURE 2, while apparatus 130 may only transmit an inquiry response (IR) including just a FHS packet. According to one embodiment of the present invention, apparatus 200 may then process the responses to decide whether to select any of the responding devices 110, 120 and 130 for immediate connection establishment. The decision may comprise determining whether any of the received responses includes a predefined indication. In the example of FIGURE 6A, none of the response messages 610, 620 and 630 received from apparatuses 110, 120 and 130 respectively include the predefined indication, so none of the responding devices is selected for immediate connection establishment.

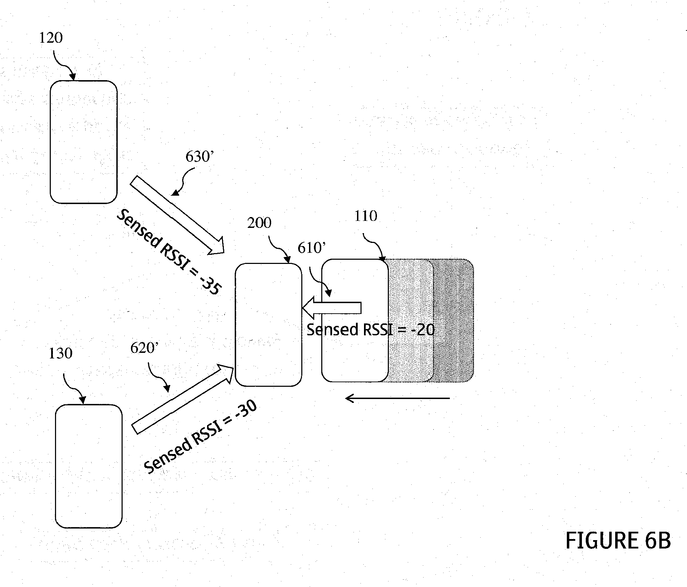

According to one embodiment of the present invention, it is possible to determine when apparatuses are being moved closer to each other or touched together to satisfy the criteria to select a responding device for immediate connection establishment. An example of such operation is disclosed in FIGURE 6B, which illustrates the example short-range communication scenario of FIGURE 6A in which apparatus 110 is now moved closer to apparatus 200 and eventually apparatus 110 touch apparatus 200. Similarly, apparatus 200 may be moved closer to apparatus 110 to touch apparatus 110. In response to devices touching each other, apparatus 110 may register the touching event with one or more sensors, such as an accelerometer or a magnetometer. In response to the touching event being registered, apparatus 110 may include an indication of the touching event in subsequent device detection response messages. As describe above in connection with FIGURE 3, the predefined indication may be included in the EIR packet 310 transmitted by apparatus 110 in response to receiving a Bluetooth™ Inquiry packet.

Now, as apparatus 200 receives device detection response messages 610', 620', and 630' from apparatuses 110, 120 and 130 respectively, response 630' can be immediately discarded as inquiry response (IR) transmitted by device 130 includes just a FHS packet without the EIR packet, so the response 630' cannot include the predefined indication. Apparatus 200 may then process the responses 610' and 620' including the EIR packet and identify the predefined indication from the response 610' transmitted by the apparatus 610', which was touched. So, apparatus 200 may now select apparatus 110 for immediate connection establishment. The immediate connection establishment may comprise one or more actions in addition to the actual connection establishment with the target apparatus. Such actions may comprise providing an indication on user interface 270, such as a touch screen display of the apparatus 200, that a communication connection is to be established with apparatus 110. The displayed indication may further include an option for a user of the apparatus 200 to reject the connection establishment.

According to one embodiment of the present invention, there can be additional criteria for selecting an apparatus for immediate connection establishment in addition to the predefined indication in the device discovery message. An example criterion can be the received signal strength information (RSSI value) regarding the received ID packet of the Bluetooth™ inquiry, which can be included in the EIR packets received by apparatus 200. Alternatively, apparatus 200 may measure the signal strengths of the received device discovery response messages to determine whether any of the responding apparatuses can be selected for immediate connection establishment. In the example of FIGURE 6B, the measured RSSI values of the response messages 610', 620' and 630' are: -20dBm, -35dBm and -30dBm respectively. According to one example, the additional RSSI criterion is -30dBm, so response message 610' satisfies also the RSSI criterion. The RSSI criterion may be used to ensure that correct device is selected for immediate connection establishment. For example, apparatus 120 could also include the predefined touch indication in the response message 620' for example due to detecting a touch event with some other device, but as the RSSI value -35dBm does not meet the RSSI criterion of -30dBm, only apparatus 110 is selected for immediate connection establishment.

According to one example embodiment of the present invention, example apparatus 200 may adjust transmission power level for the device discovery messages. With this property, device discovery signal propagation can be limited to shorter range, hence fewer devices receive inquiry message and thus fewer responses are expected to be received from the discoverable devices within the smaller range. For example, by setting transmission power to -20dBm in connection with the Bluetooth™ example embodiment, the coverage area of the inquiry transmissions gets significantly smaller.

It may also be possible that responding apparatuses send transmission power information within the Bluetooth™ EIR packet. In instances where the transmission power information is available in the EIR packet, the RSSI criterion may include an adjustable RSSI threshold value that accounts for the transmission power. For example, the threshold value may be set at 30dBm below the EIR transmission power, so that if the transmission power level in an FHS packet is +20dBm then the threshold value that will trigger selection will be the FHS packet being measured at -10dB, or 30dB below of transmission power level. Further, to ensure that apparatuses are maintained in close proximity, the RSSI criterion may require that more than one Bluetooth™ FHS packet is sensed at or above a predefined threshold RSSI value. In addition, different thresholds could be used for different phases, for example, first the threshold value may be set above - 35dBm to select one or more candidate apparatuses and then second, finally deciding the threshold value may be set above -20dBm.

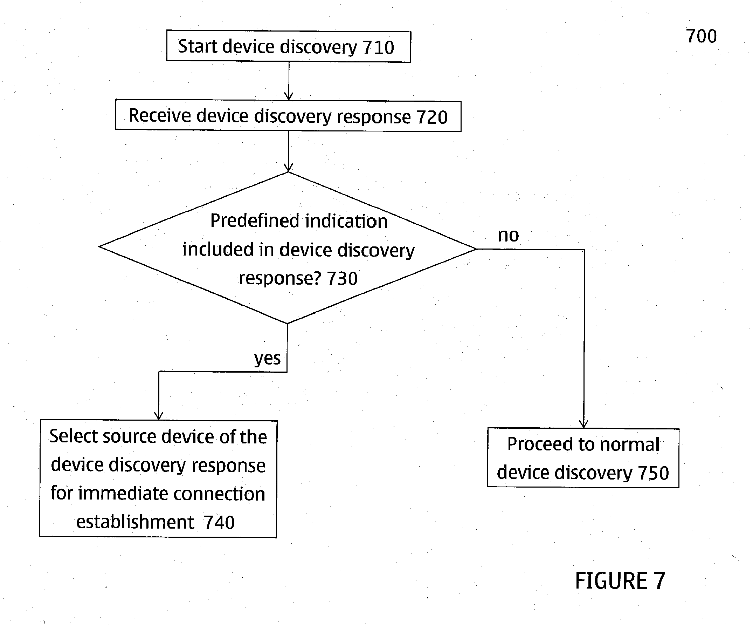

FIGURE 7 illustrates a first example method 700 according to at least one embodiment of the present invention for selecting an apparatus for immediate connection establishment. The method may also be carried out in the form of a computer process defined by a computer program. The computer program may be in source code form, object code form, or in some intermediate form, and it may be stored in some sort of distributable or a non-distributable carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

Example method 700 starts with block 710 where an apparatus, such as the example apparatus 200, starts device discovery. This may comprise transmission of one or device discovery messages to receive responses from other apparatuses within the coverage area of the apparatus 200. In block 720 one or more device discovery response messages are received from one or more other apparatuses, such as apparatuses 110, 120 and 130 of FIGURE 1. Then, on block 730, a determination is made whether any of the received device discovery response messages include a predefined indication. The determination may be based on the entries maintained in the memory and / or storage 250 of the example apparatus 200. In the event that none of the received device discovery response messages includes the predefined indication, example method 700 continues with block 750 where the process continues with normal device discovery where the responding apparatuses may be listed and displayed, so that a user is provided with an option to select at least one of the devices for connection establishment. In the event that one or more of the received device discovery response messages includes the predefined indication, example method 700 continues with block 740 where source device of one or more device discovery response messages including the predefined indication is selected for immediate connection establishment. The immediate connection establishment does not require any further involvement for the user of apparatus 200. This helps the user of the apparatus 200 to avoid the burden of making subsequent selection operations via a user interface to initiate connection establishment and reduces time required from device discovery to establishment of a communication connection.

According to an alternative embodiment, block 740 of example method 700 may comprise initiating connection with an apparatus at a remote location to initiate a service session with the apparatus at the remote location based on the information received from the one or more received device discovery response messages including the predefined indication. For example, an apparatus, such as the apparatus 200 of FIGURE 1, may initiate a connection with an apparatus at a remote location, such as the server 400 of the example environment of FIGURE 1. The connection may be used in initiating a service session with the apparatus at the remote location to obtain information regarding the source device of the one or more device discovery response messages including the predefined indication from the apparatus at the remote location.

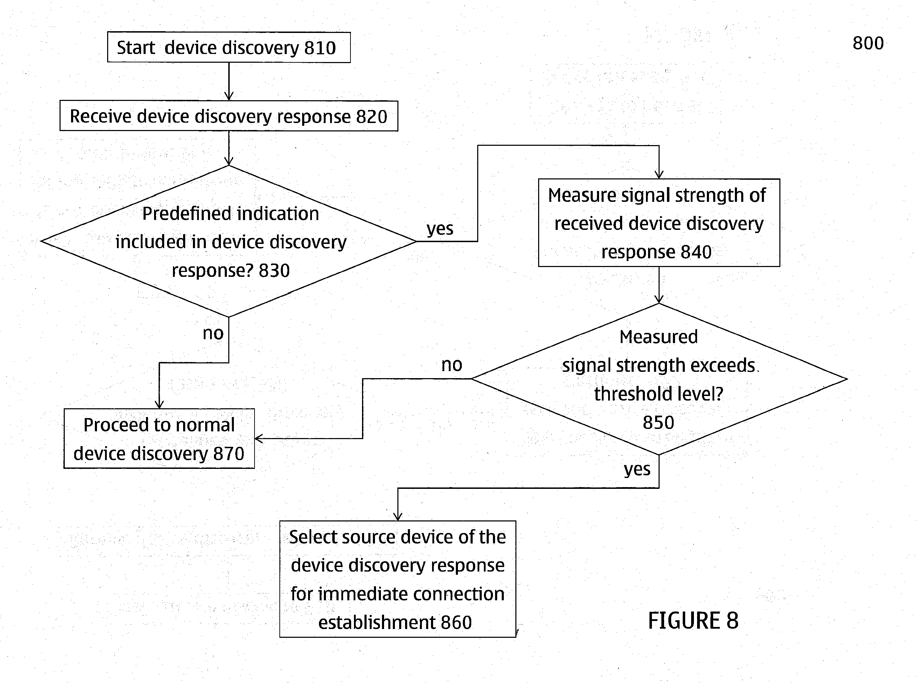

FIGURE 8 illustrates a second example method 800 according to at least one embodiment of the present invention for selecting an apparatus for immediate connection establishment. The method may also be carried out in the form of a computer process defined by a computer program. The computer program may be in source code form, object code form, or in some intermediate form, and it may be stored in some sort of distributable or a non-distributable carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

In the example method 800, blocks 810-830 correspond with blocks 710-730 of the first example method 700 of FIGURE 7. Example method 800 starts with block 810 where an apparatus, such as the example apparatus 200, starts device discovery. This may comprise transmission of one or device discovery messages to receive responses from other apparatuses within the coverage area of the apparatus 200. In block 820 one or more device discovery response messages are received from one or more other apparatuses, such as the apparatuses 110, 120 and 130 of FIGURE 1. Then, on block 830, a determination is made whether any of the received device discovery response messages include a predefined indication. The determination may be based on the entries maintained in the memory and / or storage 250 of the example apparatus 200. In the event that none of the received device discovery response messages includes the predefined indication, example method 800 continues with block 870 where the process continues with normal device discovery where the responding apparatuses may be listed and displayed, so that a user of apparatus 200 is provided with an option to select at least one of the devices for connection establishment, similarly to block 750 of the first example method 700 of FIGURE 7.

In the event that one or more of the received device discovery response messages includes the predefined indication, example method 800 continues with block 840, where the signal strength of the device discovery response messages including the predefined indication are measured. Alternatively, a signal strength value may be included in the device discovery response messages and the received signal strength value can be utilized in following block 850 of the example method 800. In block 850, it is determined whether the signal strength value exceeds a predefined threshold level. In the event that none of the received device discovery response messages including the predefined indication does not exceed the associated signal strength criterion, example method 800 goes back to block 870 where the process continues with normal device discovery where the responding apparatuses may be listed and displayed, so that a user of the apparatus 200 is provided with an option to select at least one of the devices for connection establishment, similarly to block 750 of the first example method 700 of FIGURE 7. If it is determined that least one of the received response messages including the predefined indication have signal strength value exceeding the predefined threshold level, example method 800 continues with block 860, where source device of the at least one device discovery response message is selected for immediate connection establishment. The immediate connection establishment does not require any further involvement for the user of apparatus 200. This helps the user of the apparatus 200 to avoid the burden of making subsequent selection operations via a user interface to initiate connection establishment and reduces time required from device discovery to establishment of a communication connection.

According to an alternative embodiment, block 860 of example method 800 may comprise initiating connection with an apparatus at a remote location to initiate a service session with the apparatus at the remote location based on the information received from the one or more received device discovery response messages including the predefined indication. For example, an apparatus, such as the apparatus 200 of FIGURE 1, may initiate a connection with an apparatus at a remote location, such as the server 400 of the example environment of FIGURE 1. The connection may be used in initiating a service session with the apparatus at the remote location to obtain information regarding the source device of the one or more device discovery response messages including the predefined indication from the apparatus at the remote location.

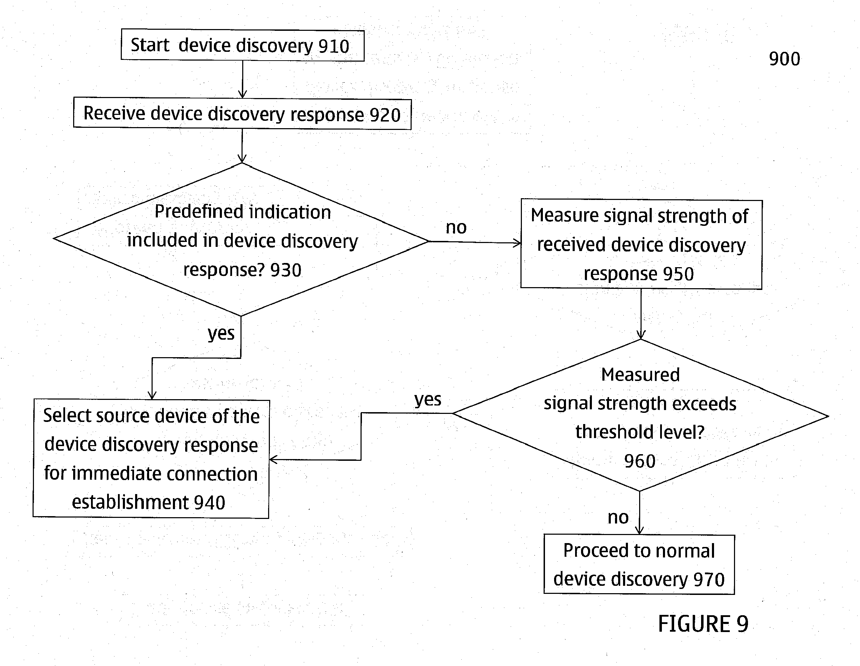

FIGURE 9 illustrates a third example method 900 according to at least one embodiment of the present invention for selecting an apparatus for immediate connection establishment. The method may also be carried out in the form of a computer process defined by a computer program. The computer program may be in source code form, object code form, or in some intermediate form, and it may be stored in some sort of distributable or a non-distributable carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

In the example method 900, blocks 910-940 correspond with blocks 710-740 of the first example method 700 of FIGURE 7. Example method 900 starts with block 910 where an apparatus, such as the example apparatus 200, starts device discovery. This may comprise transmission of one or device discovery messages to receive responses from other apparatuses within the coverage area of the apparatus 200. In block 920 one or more device discovery response messages are received from one or more other apparatuses, such as the apparatuses 110, 120 and 130 of FIGURE 1. Then, on block 930, a determination is made whether any of the received device discovery response messages include a predefined indication. The determination may be based on the entries maintained in the memory and / or storage 250 of the example apparatus 200. In the event that one or more of the received device discovery response messages includes the predefined indication, example method 900 continues with block 940 where source device of one or more device discovery response messages including the predefined indication is selected for immediate connection establishment. The immediate connection establishment does not require any further involvement for the user of apparatus 200. This helps the user of the apparatus 200 to avoid the burden of making subsequent selection operations via a user interface to initiate connection establishment and reduces time required from device discovery to establishment of a communication connection.

In the event that none of the received device discovery response messages includes the predefined indication, example method 900 continues with block 950, where the signal strengths of the received device discovery response messages are measured. Alternatively, a signal strength value may be included in the received device discovery response messages and the received signal strength value can be utilized in following block 960 of the example method 900. In block 960, it is determined whether the signal strength value exceeds a predefined threshold level. In the event that none of the received device discovery response messages exceed the associated signal strength criterion, example method 900 goes to block 970 where the process continues with normal device discovery where the responding apparatuses may be listed and displayed, so that a user of the apparatus 200 is provided with an option to select at least one of the devices for connection establishment.

If it is determined in block 960 that at least one of the received device discovery response messages have signal strength value exceeding the predefined threshold level, example method 900 continues, similarly as in connection with the determination of block 930, to block 940, where source device of the at least one device discovery response message having signal strength exceeding the predefined threshold level is selected for immediate connection establishment. The immediate connection establishment does not require any further involvement for the user of apparatus 200. This helps the user of the apparatus 200 to avoid the burden of making subsequent selection operations via a user interface to initiate connection establishment and reduces time required from device discovery to establishment of a communication connection.

According to an alternative embodiment, block 960 of example method 900 may comprise initiating connection with an apparatus at a remote location to initiate a service session with the apparatus at the remote location based on the information received from the one or more received device discovery response messages including the predefined indication. For example, an apparatus, such as the apparatus 200 of FIGURE 1, may initiate a connection with an apparatus at a remote location, such as the server 400 of the example environment of FIGURE 1. The connection may be used in initiating a service session with the apparatus at the remote location to obtain information regarding the source device of the one or more device discovery response messages including the predefined indication from the apparatus at the remote location.

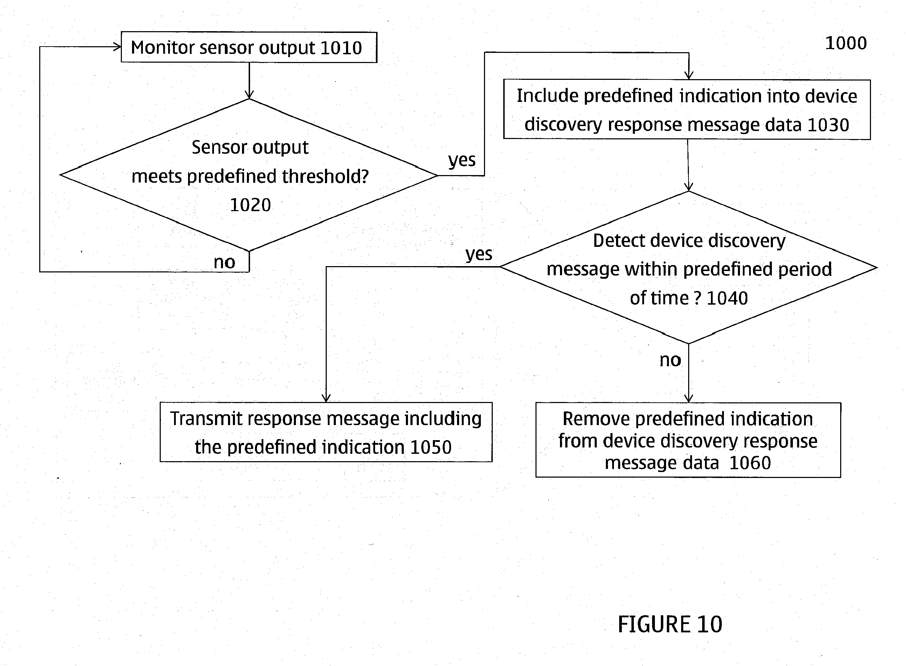

FIGURE 10 illustrates an example method 1000 according to at least one embodiment of the present invention for selecting an apparatus for immediate connection establishment. The method may also be carried out in the form of a computer process defined by a computer program. The computer program may be in source code form, object code form, or in some intermediate form, and it may be stored in some sort of distributable or a non-distributable carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

Example method 1000 starts with block 1010 where an apparatus, such as any of the apparatuses 110, 120 and 130, or alternatively the apparatus 200 of FIGURE 1 monitors one or more sensor outputs in order to determine, in block 1020, whether any of the monitored sensor outputs meets one or more predetermined thresholds. According to one example, the monitor output comprises data from an accelerometer and the predetermined threshold comprises acceleration data values corresponding to an event when the apparatus has been touched. If the determination of block 1020 results in that none of the one or more sensor outputs meet the predetermined threshold, example method 1000 goes back to block 1010 where the one or more sensor outputs are monitored. In the event that the determination of block 1020 results in that at least one sensor data meets corresponding predefined threshold, example methdod 1000 continues to block 1030, where a predefined indication is included in device discovery response message data. As discussed already in connection with FIGURE 3, the predefined indication may be included in the Extended Inquiry Response (EIR) packet 310 of the Bluetooth™ communication protocol Extended Inquiry Response. So, in the event that an apparatus has determined that sensor output meets corresponding predetermined threshold, it will respond to the received Bluetooth™ Inquiry messages with Bluetooth™ Extended Inquiry Response with an EIR packet including the predefined indication until determination of expiry of an associated timer. The expiry of the associated timer is checked at block 1040 of the example method 1040, where it is determined whether device discovery message is received within a predefined time period after receiving sensor output meeting the predefined threshold. It is also possible to use predefined time period without any checking of device discovery message. The predefined time period may depend on the type of the monitored sensor output. As an example, the predefined time period may be set to e.g. 3 seconds in response to detecting a touch event. If one or more device detection messages are determined to be received within the predefined time period, the example method 1000 continues in block 1050 where a device detection response message including the predefined indication is transmitted in response to receipt of each of the one or more device detection messages. In the event that the determination of block 1040 results in that no device detection messages have been received within the predefined period time, i.e. when the timer expires, example method continues with block 1060 where the predefined indication indication is removed from the device discovery response messages data.

An apparatus, such as the example apparatus 200 of FIGURE 4 may be provided comprising means for effectuating various features of the above example methods disclosed in FIGURES 7-10. The means may comprise software, hardware, or a combination of software and hardware. According to one embodiment, the apparatus comprises means for receiving one or more device discovery response messages, the one or more device discovery response messages including information regarding source device of the respective message; menans for determining, whether any of the one or more received device discovery response messages includes a predefined indication; and means for selecting, in response to detemrination that one or more of the received device discovery response message includes the predefined indication, source device of the one or more device discovery response messages including the predefined indication for immediate connection establishment. The apparatus may further comprise means for measuring signal strength of the received one or more device discovery response messages including the predefined indication; and means for selecting the source device of the one or more device discovery response messages including the predefined indication for immediate connection establishment when the measured signal strength exceeds a predefined threshold level. Alternatively, or in addition, the apparatus may comprise means for monitoring output of at least one sensor at the apparatus; means for determining whether any of the monitored sensor output satisfies predefined response criteria; and means for transmitting a device discovery response message including a predefined indication in response to detecting a device discovery message within a predefined time period after determination of a sensor output satisfying the predefined response criteria.

Without in any way limiting the scope, interpretation, or application of the claims appearing below, a technical effect of one or more of the example embodiments disclosed herein may be immediate connection establishment with another device, or exchange of information with another device when the other device is determined to be within a close proximity. Another technical effect of one or more of the example embodiments disclosed herein may be automatic triggering of a short-range communication module to initiate connection establishment with a responding device immediately after device discovery when receiving one or more device discovery response messages from the responding device meeting one or more response criteria. Yet another technical effect of one or more of the example embodiments disclosed herein may be helping user of an apparatus to avoid the burden of making selection operations via a user interface of the apparatus to initiate connection establishment. Yet another technical effect of one or more of the example embodiments disclosed herein may be reducing the time required from device discovery to establishment of a communication connection.

Various operations and / or the like described herein may be executed by and / or with the help of computers. Further, for example, devices described herein may be and / or may incorporate computers. The phrases "computer", "general purpose computer", and the like, as used herein, refer but are not limited to a media device, a personal computer, an engineering workstation, a personal digital assistant, a portable computer, a computerized watch, a wired or wireless terminal, phone, node, and / or the like, a set-top box, a personal video recorder (PVR), an automatic teller machine (ATM), a game console, and / or the like.

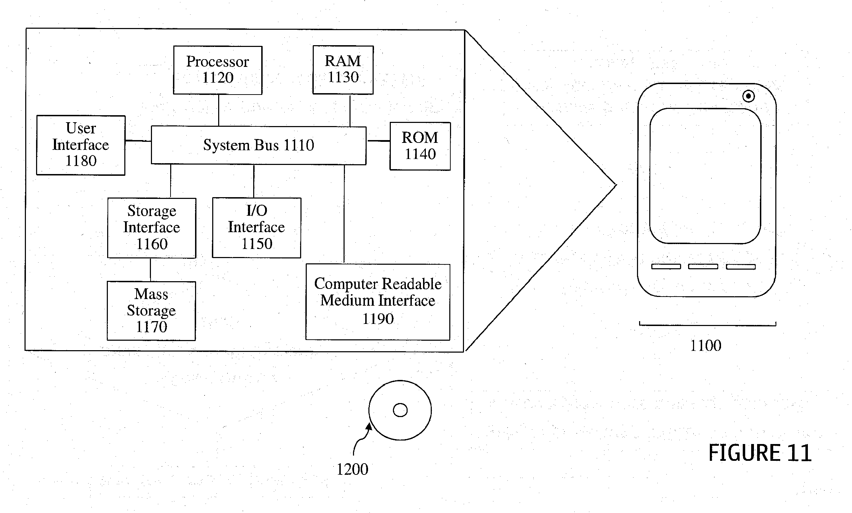

Embodiments of the present invention may be implemented in software, hardware, application logic or a combination of software, hardware and application logic. The software, application logic and / or hardware may reside on a memory of apparatus 200 of FIGURE 1. In an example embodiment, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in FIGURE 11. A computer-readable medium may comprise a computer-readable storage medium that may be any media or means that may contain or store the instructions for use by or in connection with an instruction execution system, apparatus, or device, such as a computer.

The phrases "general purpose computer", "computer", and the like may also refer to one or more processors operatively connected to one or more memory or storage units, wherein the memory or storage may contain data, algorithms, and / or program code, and the processor or processors may execute the program code and / or manipulate the program code, data, and / or algorithms. Accordingly, example computer 800 as shown in FIGURE 11 that may be considered as one embodiment of any of the apparatuses 110, 120, 130, 140 and 200 illustrated on FIGURE 1 may include various hardware modules for causing the computer to implement one or more embodiments of the present invention. According to one example, the computer 1100 include a system bus 1110, which may operatively connect processor 1120, random access memory (RAM) 1130 and read-only memory (ROM) 1140 that may store for example a computer code for the computer 1100 to perform on or more of the example methods illustrated on FIGURES 7- 10. The system bus 1110 may further operatively connect input output (I/O) interface 1150, storage interface 1160, user interface 1180 and computer readable medium interface 1190. Storage interface 1160 may comprise or be connected to mass storage 1170.

Mass storage 1170 may be a hard drive, optical drive, or the like. Processor 1120 may comprise a microcontroller unit (MCU), a digital signal processor (DSP), or any other kind of processor. Computer 1100 as shown in this example also comprises a touch screen and keys operating in connection with the user interface 1180. In various example embodiments, a mouse, and / or a keypad may alternately or additionally be employed. Computer 1100 may additionally include the computer readable medium interface 1190, which may be embodied by a card reader, a DVD drive, a floppy disk drive, and / or the like. Thus, media containing program code, for example for performing method 700 of FIGURE 7, may be inserted for the purpose of loading the code onto the computer.

Computer 1100 may run one or more software modules designed to perform one or more of the above-described operations. Corresponding program code may be stored on a physical media 1200 such as, for example, DVD, CD-ROM, and / or floppy disk. It is noted that any described division of operations among particular software modules is for purposes of illustration, and that alternate divisions of operation may be employed. Accordingly, any operations discussed as being performed by a software module may instead be performed by a plurality of software modules. Similarly, any operations discussed as being performed by a plurality of modules may instead be performed by a single module. It is noted that operations disclosed as being performed by a particular computer may instead be performed by a plurality of computers.

If desired, the different functions discussed herein may be performed in a different order and / or concurrently with each other. Furthermore, if desired, one or more of the above-described functions may be optional or may be combined.

Although various aspects of the invention are set out in the independent claims, other aspects of the invention comprise other combinations of features from the described embodiments and / or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method comprising:
receiving, at an apparatus, one or more device discovery response messages, the one or more device discovery response messages including information regarding source device of the respective message;
determining, by the apparatus, whether any of the one or more received device discovery response messages includes a predefined indication; and
selecting, by the apparatus, when determining that one or more of the received device discovery response message includes the predefined indication, source device of the one or more device discovery response messages including the predefined indication for immediate connection establishment.

2. A method according to claim 1, wherein the predefined indication indicates that the source device has been touched.

3. A method according to claim 1, wherein the immediate connection establishment is performed automatically without manual user input and includes displaying an indication that a wireless communication connection will be established with the source device of the one or more device discovery response messages including the predefined indication.

4. A method according to claim 1 further comprising:
measuring, by the apparatus, signal strength of the received one or more device discovery response messages including the predefined indication; and
selecting, by the apparatus, the source device of the one or more device discovery response messages including the predefined indication for immediate connection establishment when the measured signal strength exceeds a predefined threshold level.

5. A method according to claim 4, wherein the predefined threshold level correlates with the apparatus being located close to a touching range from the source apparatus.

6. A method comprising;
monitoring output of at least one sensor at an apparatus;
determining, by the apparatus, whether any of the monitored sensor output satisfies predefined response criteria; and
transmitting a device discovery response message including a predefined indication in response to detecting a device discovery message within a predefined time period after determination of a sensor output satisfying the predefined response criteria.

7. A method according to claim 6, wherein the predefined indication indicates that the apparatus has been touched.

8. A computer program comprising computer readable program code adapted to perform the method of any of the preceding claims when said program is run on a computer.

9. A computer program according to claim 8, wherein the computer program is a computer program product comprising a computer-readable medium bearing computer program code embodied therein for use with a computer.

10. An apparatus, comprising:
means for receiving one or more device discovery response messages, the one or more device discovery response messages including information regarding source device of the respective message;
means for determining whether any of the one or more received device discovery response messages includes a predefined indication; and
means for selecting, in response to the determination that one or more of the received device discovery response messages includes the predefined indication, source device of the one or more device discovery response messages for immediate connection establishment.

11. An apparatus according to claim 10, wherein the predefined indication indicates that the source device has been touched.

12. An apparatus according to claim 10, wherein the immediate connection establishment is performed automatically without manual user input.

13. An apparatus according to claim 10, further comprising means for displaying an indication that a wireless communication connection will be established with the source device of the one or more device discovery response messages including the predefined indication.

14. An apparatus according to claim 10, further comprising
means for measuring signal strength of the received one or more device discovery response messages including the predefined indication; and
means for selecting the source device of the one or more device discovery response messages including the predefined indication for immediate connection establishment when the measured signal strength exceeds a predefined threshold level.

15. An apparatus according to claim 14, wherein the predefined threshold level correlates with the apparatus being located close to a touching range from the source apparatus.

16. An apparatus, comprising:
means for monitoring output of at least one sensor at the apparatus;
means for determining whether any of the monitored sensor output satisfies predefined response criteria; and
means for transmitting a device discovery response message including a predefined indication in response to detecting a device discovery message within a predefined time period after determination of a sensor output satisfying the predefined response criteria.

17. An apparatus according to claim 16, wherein the predefined indication indicates that the apparatus has been touched.
